# EUROPEAN PATENT APPLICATION

(11) **EP 2 072 332 A1**
(43) Date of publication of application: **24.06.2009**
(21) Application number: 08172399.1
(22) Date of filing: 19.12.2008
(51) Int. Cl.: B60Q 1/26, B60R 1/12

(54) **Slim profile light assembly for an exterior vehicle mirror**

(30) Priority: 20.12.2007 US 8630 P; 01.02.2008 US 12247; 20.12.2007 US 8625 P
(71) Applicant: MEKRA Lang GmbH & Co. KG, 90765 Fürth (DE)
(72) Inventor: Enz, Andreas, Columbia, SC 29223 (US)
(74) Representative: Winter, Brandl, Fürniss, Hübner Röss, Kaiser, Polte Partnerschaft Patent- und Rechtsanwaltskanzlei

(57) **Abstract**

A slim profile lighting assembly for an exterior rear view mirror (10) comprising a light transmissive panel (12) disposed on an exterior side of a mirror housing (14); a luminant (16,40) carried by the housing (14) adjacent the light transmissive panel (12); and, an energy source (18,48) connected to the luminant (16,40) for producing light in and emanating from the luminant (16,40) so that light emitted from the luminant (16,40) passes through the light transmissive panel (12). The luminant (16,40) is preferable flat and/or flexible. The luminant (16,40) is made of a fiber optic material, is a fiber optic web or is an electro-optic film.

## Description

The invention relates to exterior rearview vehicle mirrors, and more particularly, to a slim profile light assembly for illuminating a light transmissive panel in a mirror housing that provides a compact and flush to the housing design so that a slimmer construction and overall appearance can be applied to the mirror housing.

Exterior vehicle mirror assemblies have increasingly been incorporated with various lighting systems for illuminating indicators, displaying indicia, and the like. A problem has arisen in that typical lighting systems require significant amounts of interior volume within the mirror assembly housing. For example, incandescent light bulbs require various socket and mounts, and the bulbs themselves are comparatively large given the limited space for mounting other operational components for the mirrors. Smaller light sources such as LEDs are an improvement over incandescent bulbs and are used regularly in current mirror assemblies. However, these LED arrangements, such as a turn signal indicator, require large mounting plates and related components to support the LEDs in a patterned arrangement, thus negating the benefit of the smaller light source.

Additionally, traditional light sources such as incandescent light bulbs and LEDs do not provide a uniform light transmission over a given surface area, but rather have intense points of light emitted at staggered locations throughout a given area. Various light diffusion and control mechanisms are known in the prior art to dissipate the light to attempt to provide uniform appears, such as for turn signals and the like. The control mechanisms can add unnecessary complexity and cost to the mirror assemblies when a uniform light distribution is preferred.

The prior art is replete with such mirror assemblies and clearly illustrate the large interior volumes of the mirror housing consumed by such displays. When adding other components such as a mirror heating system, radio antenna equipment, motor assemblies, carrier plates, power systems, and other common design elements, the mirror housings become large. The larger the mirror assembly, the heavier it becomes and the more prone to failure due to excessive wear and tear on the support elements. Further, because of the support systems components used to power and control traditional lighting systems as described above, they cannot be easily carried on the housing in a flush arrangement with the housing to provide for an overall slim appearance.

Thus, a need has arisen for a slim profile lighting system that can illuminate indicators and the like in a mirror housing with a uniform light distribution, while using less interior volume and which can be flush mounted to the mirror housing to allow for a slimmer mirror housing design.

Accordingly, it is an object of the present invention to provide a slim profile lighting system that utilizes less interior space in a vehicle mirror housing and provides a uniform light distribution.

The above objectives are accomplished with the slim profile lighting assembly for an exterior rearview mirror as defined in claim 1.

Accordingly the slim profile light assembly comprises a light transmissive panel disposed on an exterior side of a mirror housing; a luminant carried by the housing adjacent the light transmissive panel; and, an energy source connected to the luminant for producing light in and emanating from the luminant so that light emitted from the luminant passes through the light transmissive panel. The luminant is preferable flat and/or flexible.

According to preferred embodiments the luminant is made of a fiber optic material, is a fiber optic web or is an electro-optic film.

In a further embodiment, the light transmissive panel comprises a translucent reflector for controlling light emitted from the luminant.

In a further embodiment, the luminant is carried between the exterior side of the mirror housing and the light transmissive panel. Specifically the luminant covers a rear side of the light transmissive panel so that light is uniformly emitted though the light transmissive panel.

In a further embodiment, the mirror housing adjacent the luminant is opaque so that light emitted from the luminant generally passes only through the light transmissive panel.

In a further embodiment, the light transmissive panel includes a recess receiving the luminant so that the light transmissive panel is carried flush against the exterior side of the mirror housing.

In a further embodiment, the fiber optic web includes a first distal end extending from the exterior side of the mirror housing to an interior side of the mirror housing; the first distal end connected to the light source and adapted for receiving light from the light source and directing the light into the fiber optic web.

In a further embodiment, the fiber optic web includes a second distal end extending from the exterior side of the mirror housing to an interior side of the mirror housing; the second distal end connected to a secondary light source and adapted for receiving light from the secondary light source and directing the light into the fiber optic web.

In a further embodiment, the first distal end includes a fiber optic cable interconnecting the fiber optic web to the light source, and the second distal end includes a fiber optic cable interconnecting the fiber optic web to the secondary light source.

In a further embodiment, the light source comprises at least one LED carried in the mirror housing.

The construction designed to carry out the invention will hereinafter be described, together with other features thereof. The invention will be more readily understood from a reading of the following specification and by reference to the accompanying drawings forming a part thereof, wherein two examples of the invention are shown and wherein:
Figure 1 shows a rear perspective view of the exterior vehicle mirror according to the present invention;
Figure 2 shows an exploded rear perspective view of the exterior vehicle mirror according to the present invention;
Figure 3 shows an interior elevation view of the mirror housing according to the present invention;
Figure 4 shows a cross-section view of the mirror housing according to the present invention;
Figure 5A shows a detailed perspective view of a distal end of the light assembly according to the present invention;
Figure 5B shows a detailed side cross-section view of a distal end of the light assembly according to the present invention;
Figure 5C shows a detailed top cross-section view of a distal end of the light assembly according to the present invention;
Figure 6 shows a second embodiment of the invention with an electro-optic film as flat luminant; and
Figure 7 shows the basic construction of an electro-optic film applied in the second embodiment.

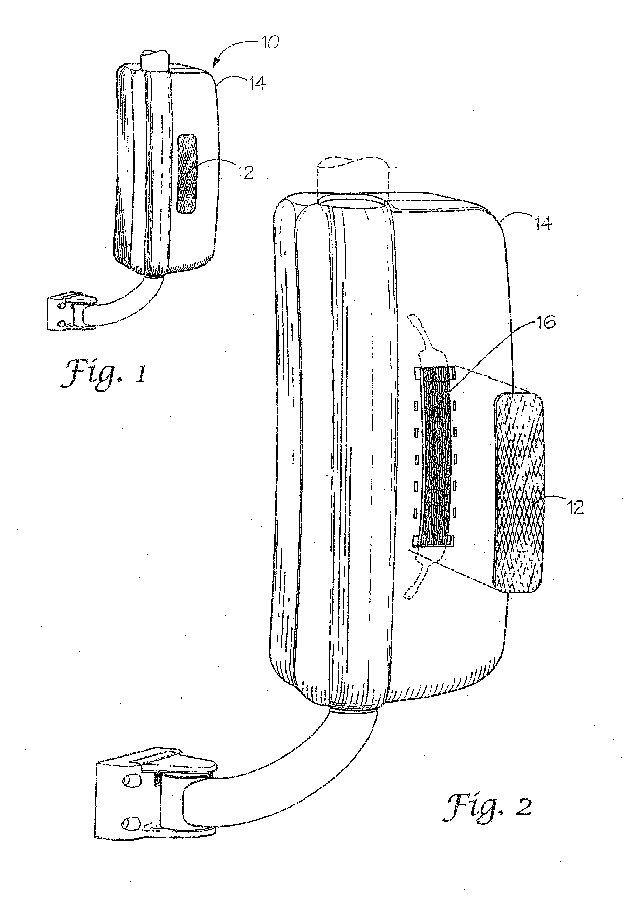

With reference to the drawings, the invention will now be described in more detail. Referring to Fig. 1, a rear view of an exterior vehicle mirror assembly, designated generally as 10, is shown having a slim profile lighting assembly for illuminating a light transmissive panel 12. The light transmissive panel 12 is disposed on an exterior side of a mirror housing 14. Referring to Fig. 2, a flat woven fiber optic web 16, is carried by mirror housing 14 behind light transmissive panel 12 and positioned adjacent light transmissive panel 12 when assembled as in Fig. 1.

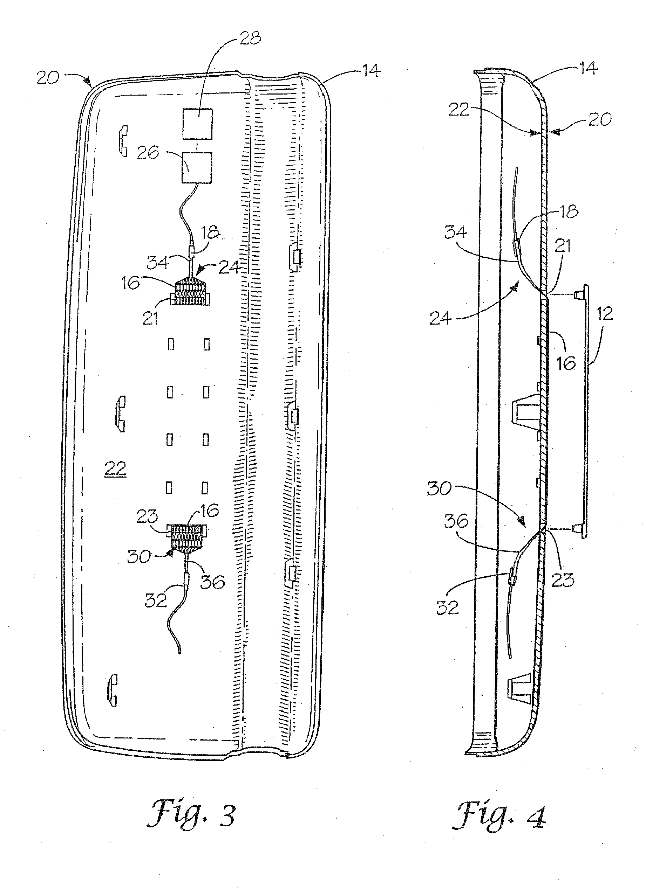

A flat woven fiber optic web of the type suitable for use in the first embodiment of the present invention is manufactured by Lumitex, Inc. 8443 Dow Circle, Strongsville, OH 44136. The woven fiber optic web is constructed and arranged to not only channel light, but to emit light from various points along the strands of interlaced fiber optic cable as a result of its woven configuration. This provides a backlighting ability not obtainable from traditional fiber optic cabling that is designed to only emit light at an end point of the cable. Referring to Fig. 3, a light source 18 is connected to fiber optic web 16 for channeling light through the fiber optic web so that light emitted from the fiber optic web passes through light transmissive panel 12.

In the illustrated embodiment of Fig. 1, light transmissive panel 12 comprises a translucent reflector for controlling light emitted from fiber optic web 16. Alternatively, light transmissive panel 12 can be any fully transparent or semi-opaque panel, reflector, or even simply an opening in mirror housing 14 that allows light from fiber optic web 16 to exit the mirror housing. Referring to Fig. 4, fiber optic web 16 is preferably carried between exterior side 20 of mirror housing 14 and light transmissive panel 12. This provides for limited interior intrusion by the lighting assembly into interior side 22 of mirror housing 14 to maximize interior space for other mirror assembly components. Additionally, it is preferred that mirror housing 14 adjacent fiber optic web 16 be opaque so that light emitted from fiber optic web 16 generally passes only through light transmissive panel 12. This helps prevent against light leakage that might otherwise radiate from an undesired location in mirror housing 14. Preferably, a reflective backing is applied to fiber optic web 16 adjacent mirror housing 14 to direct the maximum possible light through light transmissive panel 12. Alternatively, it is well known to use opaque tapes and other materials to insulate lighting components against light leakage within the mirror housing. Thus, the present invention is not limited to placing fiber optic web 16 between an opaque section of mirror housing 14 and light transmissive panel 12.

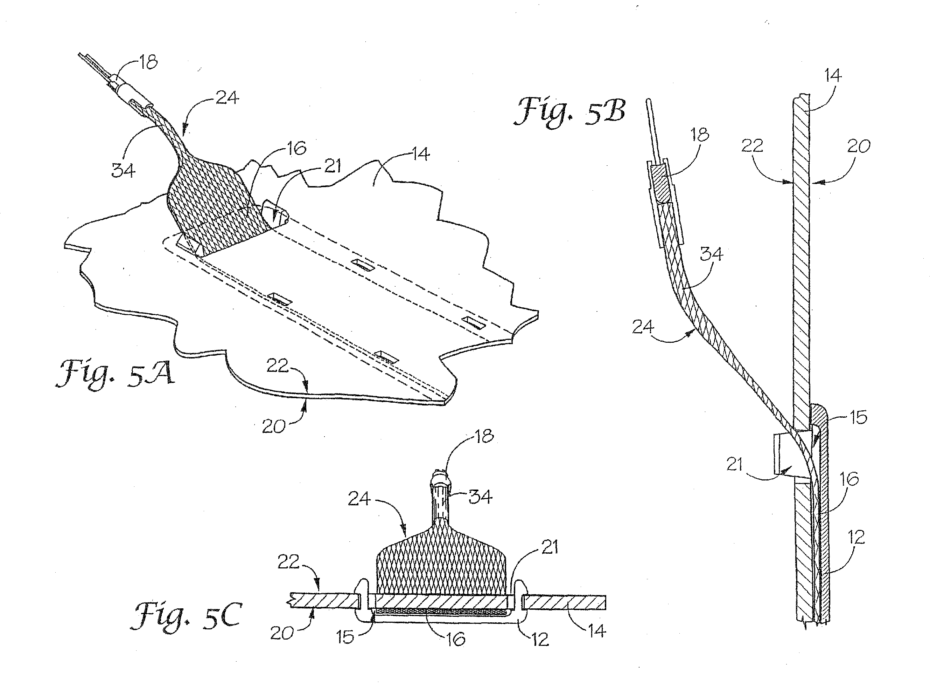

Further referring to Fig. 4, in the illustrated embodiment, fiber optic web 16 is of a size and shape to cover a rear side of light transmissive panel 12 so that light is uniformly emitted though the light transmissive panel. Because fiber optic web 16 can be woven in various shapes and sizes, it readily accommodates custom lighting applications not possible with traditional mirror lighting systems. Referring to Fig. 5B and 5C, in a further embodiment, light transmissive panel 12 may include a web recess, designated generally as 15, formed in a backside of light transmissive panel 12 disposed opposite exterior side 20 of mirror housing 14 when mounted. Web recess 15 is constructed and arranged to receive fiber optic web 16 so that fiber optic web 16 is recessed into the backside of light transmissive panel 12 to allow light transmissive panel 12 to extend over fiber optic web 16 and be mounted flush against exterior side 20 of mirror housing 14. Alternatively, web recess 15 could be formed in exterior side 20 of mirror housing 14.

Referring to Figs. 3 and 5A-5C, in the illustrated embodiment, fiber optic web 16 includes a first distal end, designated generally as 24, extending from exterior side 20 of mirror housing 14 to interior side 22 of the mirror housing through web opening 21. First distal end 24 is connected to light source 18 and adapted for receiving light from light source 18 and directing the light into fiber optic web 16 for the desired lighting function. Light source 18 is operatively associated with a control unit 26 and a power supply 28 to operate the light assembly. Preferably, power supply 28 is the central vehicle power supply and control unit 26 can be any of various mechanisms operatively associate with the vehicle systems or an independent control switch to turn the light assembly on and off as desired.

For larger applications such as the illustrated embodiment, fiber optic web 16 includes a second distal end, designated generally as 30, extending from exterior side 20 of mirror housing 14 to interior side 20 of the mirror housing through web opening 23. As with first distal end 24, second distal end 30 is connected to a secondary light source 32 and adapted for receiving light from secondary light source 32 and directing the light into fiber optic web 16. Providing a light source at each end of the fiber optic web improves brightness and uniformity in larger fiber optic webbings.

Further, first distal end 24 includes a fiber optic cable 34 interconnecting fiber optic web 16 to light source 18, and second distal end 30 includes a fiber optic cable 36 interconnecting fiber optic web 16 to secondary light source 32. In a further embodiment, light sources 18 and 32 comprise at least one LED carried in the mirror housing. Given the improvements in LED brightness technology, only a single LED is typically required to provide sufficient illumination of the fiber optic web for most mirror light applications. As noted above, however, for larger application of the fiber optic web, it may be desirable to provide a second LED light source at the opposing end. As illustrated, light sources 18 and 32 are coupled to fiber optic cables 34 and 36 so that the distal ends of the fiber optic cables 34 and 36 are located adjacent the LEDs for maximum light transmission to channel the light from the light sources into fiber optic web 16. Preferably, fiber optic cables 34 and 36 are a bundle of individual fiber optic strands that extend from fiber optic web 16 and are secured together for channeling the light.

In the following description of the second embodiment the same reference signs are used for corresponding parts. The second embodiment differs from the first embodiment in that instead of a fiber optic web an electro-optic film 40 is used as luminant. There is only one current source instead of one or two light sources, as described above in connection with the fiber optic web, guiding an electric current through the electro-optic film 40. The further spatial relationships described above equally hold in this alternartive case, the electro-optic film 40 generating backlight to pass the light transmissive panel 12, so that both, the fiber optic web and the electro-optic film are flat, flexible luminants according to the invention.

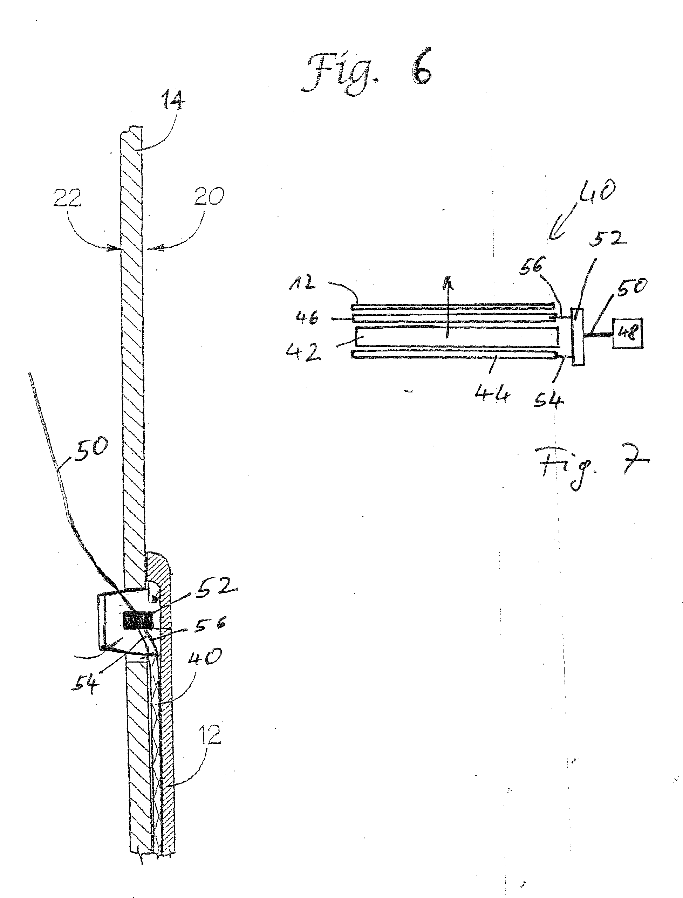

The basic construction of the electro-optic film 40 is shown in Fig. 7. The electro-optic film 40 comprises an electro-optic active layer 42 sandwiched between a rear electrode 44 and an optical transparent front electrode 46. The two electrodes are connected to an electric power source 48 by means of an electric cable 50, a connector means 52 and first and second connector leads 54 and 56. The electro-optic film 40 is provided on the rear side of the light transmissive panel 12. The electric cable 50 from the power source 48 (not shown in Fig. 6) ends in the connector means 52 adjacent the electro-optical film 40. From the connector means 52 the first connector lead 54 connects to the rear electrode 44 and the second connector lead 56 connects to the transparent front electrode 46.

An electro-optic film of the type suitable for use in the second embodiment of the present invention is provided by Lumitec AG, CH-9056 Gais, Switzerland or by H. C. Starck GmbH, 38642 Goslar, Germany.

While preferred embodiments of the invention have been described using specific terms, such description is for illustrative purpose, and it is to be understood that changes and variations may be made without departing from the scope of the claims.

## Claims

1. A slim profile lighting assembly for an exterior rearview mirror (10), comprising:
- a light transmissive panel (12) disposed on an exterior side of a mirror housing (14);
- a luminant (16; 40) disposed to a rear side of said light trans-missive panel (12) facing said mirror housing (14); and
- a cable (34; 50, 52, 54, 56) connecting an energy source (18; 48) to said luminant (16; 40) for generating light by said luminant (16; 40) so that light emitted from said luminant (16: 40) passes through said light transmissive panel (12).

2. The lighting assembly of claim 1, wherein said luminant (16; 40) is flat.

3. The lighting assembly of claim 1 or 2, wherein said luminant (16; 40) is flexible.

4. The lighting assembly of anyone of the preceding claims, wherein:
- said cable (34) is a first fiber optic cable connected to a first distal end (24) of said luminant (16; 40),
- said energy source (18) is a first light source; and
- light is emitted by said luminant (16; 40) by channeling light from the first light source (18) through said luminant (16; 40).

5. The lighting assembly of claim 4, further comprising a second fiber optic cable (36) connecting a second distal end (30) of said luminant (16; 40) and extending to a second light source (32) in an interior side of said mirror housing (14), said second distal end (30) being adapted to receive light from said second light source (32) and directing the light into said luminant (16; 40).

6. The lighting assembly according to anyone of the preceding claims 4 to 5, wherein said first light source (18) comprises at least one LED carried in said mirror housing (14).

7. The light assembly of claim 5 or 6, wherein said second light source (18) comprises at least one LED carried in said mirror housing (14).

8. The lighting assembly according to anyone of the preceding claims, wherein said luminant (16) comprises a fiber optic material.

9. The light assembly of claim 8, wherein the luminant (16) is a fiber optic web.

10. The lighting assembly according to anyone of the preceding claims 1 to 3, wherein:
- said luminant is an electro-optic film (40), said cable is an electric cable (50. 52, 54, 56), and said energy source is an electric power source (48); and
- light is emitted by said electro-optic film (40) by guiding a current from said power source (48) through said electro-optic film (40).

11. The lighting assembly according to anyone of the preceding claims, wherein said light transmissive panel (12) comprises a translucent reflector for controlling light emitted from said luminant (16; 40).

12. The lighting assembly according to anyone of the preceding claims, wherein said luminant (16; 40) is disposed between said exterior side of said mirror housing (14) and said light transmissive panel (12).

13. The lighting assembly of claim 12, wherein said luminant (16; 40) covers said rear side of said light transmissive panel (12) so that light is uniformly emitted through said light transmissive panel (12).

14. The lighting assembly according to anyone of the preceding claims, wherein said mirror housing (14) adjacent said luminant (16; 40) is opaque so that light emitted from said luminant (16; 40) generally passes only through said light transmissive panel (12).

15. The lighting assembly according to anyone of the preceding claims, wherein said light transmissive panel (12) includes a recess receiving said luminant (16; 40) so that said light transmissive panel (12) is disposed flush against said exterior side of said mirror housing (14).

16. The lighting assembly according to anyone of the preceding claims, wherein said cable (34; 50, 52, 54, 56) extends in an interior side of said mirror housing (14).
